# EUROPEAN PATENT SPECIFICATION

(11) **EP 3 993 136 B1**
(45) Date of publication and mention of the grant of the patent: **02.12.2026**
(21) Application number: 21204929.0
(22) Date of filing: 27.10.2021
(51) Int. Cl.: H01M 10/48, G06Q 50/06, G06Q 10/06, G06Q 10/04, H01M 10/42

(54) **GEOLOCATION BASED BATTERY SETTINGS**
BATTERIEEINSTELLUNGEN AUF BASIS DER GEOLOKALISIERUNG
PARAMÈTRES DE BATTERIE BASÉS SUR LA GÉOLOCALISATION

(30) Priority: 29.10.2020 US 202017084517
(43) Date of publication of application: 04.05.2022
(73) Proprietor: Google LLC, Mountain View, CA 94043 (US)
(72) Inventor: WANG, David, Mountain View, CA, 94043 (US); LIM, James Robert, Mountain View, CA, 94043 (US); YE, Chang Hong, Mountain View, CA, 94043 (US); RAGHUPATHY, Arun Prakash, Mountain View, CA, 94043 (US)
(74) Representative: Maikowski & Ninnemann Patentanwälte Partnerschaft mbB

(56) References cited:
- US-A1- 2012 200 257
- US-A1- 2020 166 356

## Description

### TECHNICAL FIELD

This application relates generally to battery technology including, but not limited to, methods, systems and devices for provisioning a rechargeable battery of an outdoor electronic device based on a geographic location of the electronic device.

### BACKGROUND

Electronic devices can be exposed to a wide range of weather conditions when they are used outdoors. Various environmental factors, e.g., latitude, elevation, and atmospheric circulation, may result in a large temperature variation across the different geographic locations for the same type of outdoor electronic devices. For example, average peak summer temperature varies from ~19 °C in San Francisco to ~40°C in Phoenix. As a result, lithium ion batteries used in the outdoor electronic devices can be exposed to large temperature variations. Particularly, when a lithium ion battery is exposed to high summer temperatures, e.g., in Phoenix, gas may be generated inside the battery that causes the battery to swell, which could irreversibly impair battery performance. Excessive battery swelling may also increase internal pressure within an electronic device and create a risk of breaking open a battery enclosure. Such situations associated with battery swelling may become worse if the batteries are held at a relatively high state of charge (e.g., >80%).

Some electronic devices are operated with reduced battery charge voltages (e.g., from 4.2 V to 3.9 V) to prevent the batteries from being fully charged, which could cause excessive battery swelling in high temperature operating conditions. This reduced charging level may lead to shortened device runtime per charge and frequent battery charging, and therefore, could require a device to use larger capacity batteries to achieve desired device runtimes per charge. In many situations, an entire class of outdoor electronic devices (e.g., a family of doorbell cameras) are forced to adopt the same reduced battery charge voltage settings to accommodate high temperature conditions that are only experienced by a small portion of these devices, which may compromise overall device performance, customer satisfaction, or cost efficiency of these electronic devices. As such, there is a need for a mechanism to control battery swelling effectively and efficiently in many electronic devices that include a rechargeable battery and have to operate in a wide range of weather conditions. US 2020/0166356 A1 relates to a system for predicting the range of an electric vehicle. The system comprises at least one memory configured to store computer program code and at least one processor configured to execute the computer program code in order to determine future location prediction data for the electric vehicle based on a mobility profile, wherein the mobility profile comprises historical usage data for the electric vehicle. The computer program code further comprises code to retrieve wheather data from a weather service provider, wherein the weather data are associated with the future location prediction data of the electric vehicle and the weather data include temperature data associated with the future location prediction data of the electric vehicle. Further, the computer program code comprises code to calculate a range prediction value for the electric vehicle based on the future location prediction data and the weather data. US 2012/0200257 A1 describes a system for controlling a state-of-charge (SOC) of a vehicle battery, such as a high-voltage battery used by a hybrid electric vehicle for vehicle propulsion, so that the SOC is maintained within a desired SOC range that is temperature-dependent. The system uses a battery temperature prediction to determine a desired SOC range, and then controls the amount of charge on the vehicle battery such that the SOC is maintained within the desired SOC range. If the battery temperature prediction goes lower, the desired SOC range is adjusted upwards in order to account for increased internal battery resistance and to ensure that the vehicle battery has enough power to start the vehicle. Similarly, as the battery temperature prediction goes higher, the desired SOC range is adjusted downwards in order to reduce degradation effects.

### SUMMARY

This application describes systems and methods for provisioning a rechargeable battery of an outdoor electronic device when the outdoor electronic device is installed and initialized. Local outdoor temperature information is used to determine a battery setting (e.g., an upper limit for a state of charge, or a battery charge voltage) of the rechargeable battery in the electronic device. When identical electronic devices are shipped to different geographic locations having a wide range of weather conditions, the rechargeable battery of each individual electronic device is initialized with a respective battery setting (e.g., the upper limit for the state of charge) to fit a local weather condition. Such an individualized battery setting allows each electronic device to operate with a desirable battery condition without suffering from detrimental side effects associated with unfit battery settings (e.g., battery swelling, device deformation or damage, insufficient battery charge voltages, shortened device runtimes, and/or frequent battery charging).

In one aspect, implementations include a battery provisioning method in accordance with claim 1.

In some implementations, the electronic device includes memory for storing a plurality of outdoor temperatures in association with a plurality of known geographic locations. The outdoor temperature information of the geographic location includes one of the plurality of outdoor temperatures. After device provisioning and during normal operation, the electronic device updates the plurality of outdoor temperatures associated with the plurality of known geographic locations that is stored in the memory. The upper limit for the state of charge of the rechargeable battery is updated accordingly, such that the rechargeable battery can be charged according to the updated upper limit. This update may occur periodically or upon request.

In another aspect, implementations include an electronic device having the features of claim 11.

In yet another aspect, according to claim 13, implementations include a non-transitory computer-readable medium, having instructions stored thereon, which when executed by one or more processors cause the processors to perform the above battery provisioning method.

### BRIEF DESCRIPTION OF THE DRAWINGS

For a better understanding of the various described implementations, reference should be made to the Detailed Description below, in conjunction with the following drawings in which like reference numerals refer to corresponding parts throughout the figures.
Figure 1 illustrates an example operating environment where an electronic device is located outdoors and communicatively coupled to one or more other electronic devices (e.g., a mobile device and a display assistant device) and a server system, in accordance with some implementations.
Figure 2 is a flowchart of an example process for provisioning a rechargeable battery of an electronic device located at a geographic location, in accordance with some implementations.
Figure 3 illustrates an example battery setting register that stores a plurality of battery settings, in accordance with some implementations.
Figure 4 is an example table showing a historical average peak summer temperature in some U.S. cities, in accordance with some implementations.
Figure 5 is a flowchart of an example process for adjusting a battery setting during normal operation of an electronic device, in accordance with some implementations.
Figure 6A is a chart correlating a battery swelling ratio and a state of charge of a rechargeable battery, in accordance with some implementations. Figure 6B is a chart correlating a battery charge voltage and a state of charge of a rechargeable battery, in accordance with some implementations. Figure 6C is a temporal diagram of a battery supply voltage and a battery supply current of a rechargeable battery, in accordance with some implementations.
Figures 7A and 7B illustrate a flow diagram of a battery provisioning method, in accordance with some implementations.

Like reference numerals refer to corresponding parts throughout the several views of the drawings.

### DETAILED DESCRIPTION

Various implementations of this application are directed to provisioning a rechargeable battery of an electronic device with a geolocation-based battery setting when the electronic device is installed and initialized at a particular geographic location. Examples of the geolocation-based battery setting include an upper limit for a state of charge and/or a battery charge voltage of the rechargeable battery. Local outdoor temperature information is identified for the geographic location, and used to determine a battery setting for the electronic device. In some implementations, when identical electronic devices are shipped to different geographic locations having a wide range of weather conditions, the rechargeable battery of each of the electronic devices is initialized with a respective battery setting to fit a local weather condition. For example, the upper limit of the state of charge might be initialized as 80% and 60% for rechargeable batteries of electronic devices used in San Francisco and Phoenix, respectively. By these means, battery-powered electronic devices do not need to operate with universal but sub-optimal battery settings and the resulting compromised battery and device performance.

Specifically, an electronic device that is shipped to a location in a lower temperature region (e.g., San Francisco) does not have to adopt a compromised battery setting of those shipped to a location in a higher temperature region (e.g., a lower state of charge used in Phoenix), thereby avoiding associated side effects of insufficient battery charge voltages, shortened device runtimes, and/or frequent battery charging. Likewise, an electronic device that is shipped to a location in a higher temperature region (e.g., Phoenix) does not have to adopt a compromised battery setting of those shipped to a location in a lower temperature region (e.g., a high state of charge used in San Francisco), thereby avoiding associated side effects of battery swelling, device deformation, and/or device damage.

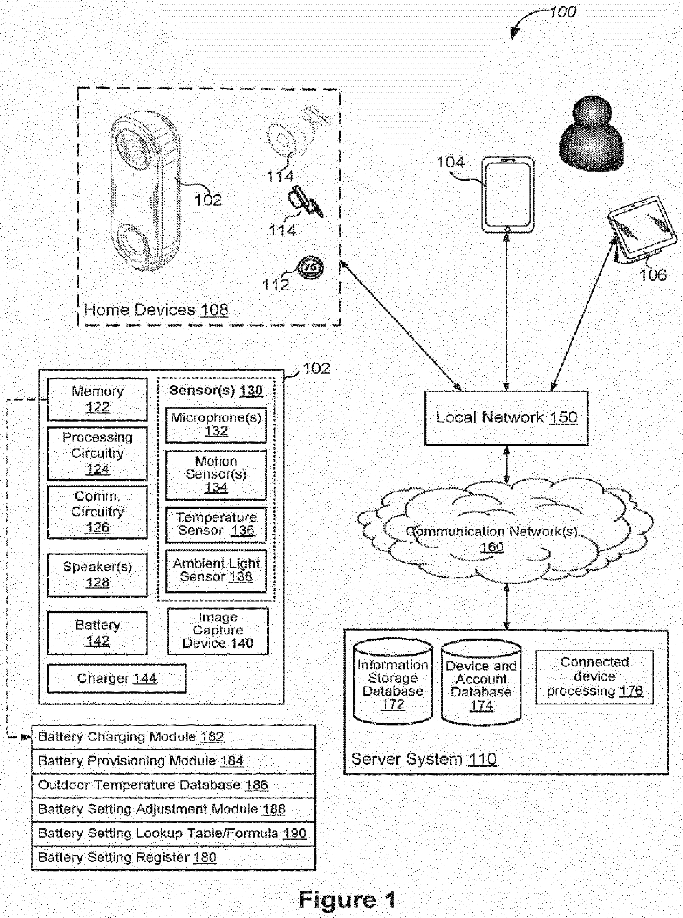

Figure 1 illustrates an example operating environment 100 in which an electronic device 102 is located outdoors and communicatively coupled to one or more other electronic devices (e.g., a mobile device 104 and a display assistant device 106) and a server system 110, in accordance with some implementations. An example of the electronic device 102 is a doorbell device with or without a camera. The doorbell device 102 is located outdoors near a front door of a house. The doorbell device 102 causes a doorbell ring inside the house or sends a notification to a mobile device 104 when a visitor presses a doorbell button of the doorbell device. Further, the doorbell device 102 having a camera can alert a user to the presence of people and/or packages at the front door and monitor activity at the front door via the camera, independently of whether the visitor presses the doorbell button. Conversely, in some implementations, the electronic device 102 is simply an outdoor surveillance camera that is located outdoors and has no doorbell related functions. In some implementations, the electronic device 102 is a smart lock device. Due to its outdoor position, the electronic device 102 is at least partially or entirely exposed to an outdoor weather condition at a corresponding geographic location of the operating environment 100. In some implementations, the electronic device 102 is only partially exposed to the outdoor weather conditions, when its local environment is modified to reduce an impact of the outdoor weather condition (e.g., using a shade shield or a clear dome housing to protect the electronic device 102 from sun, rain or wind exposure).

The operating environment 100 includes one or more home devices 108, and the electronic device 102 is one of the home devices 108. The home devices 108 may further include one or more of a thermostat 112 and surveillance cameras 114. The thermostat 112 detects ambient climate characteristics (e.g., temperature and/or humidity) and controls a heating, ventilation, and air conditioning (HVAC) system (not shown) of the operating environment 100 accordingly. The cameras 114 may be part of a home security system that monitors activity in and around the operating environment 100 and allow a user to track the activity locally or remotely via the mobile device 104. Various electronic devices 102-108 (also referred to herein as "connected" or "integrated" devices) are interconnected via a local network 150, and further interconnected with the server system 110 and electronic devices 102-108 that are optionally located in another operating environment 100 via one or more communication networks 160.

By virtue of network connectivity, a user may control the home devices 108 (e.g., the electronic device 102) in the operating environment 100 even if the user is not proximate to the home devices 108. As one example, the user may use the mobile device 104 or display assistant device 106 to view or adjust a current set point temperature of the thermostat 112 (e.g., via the local network 150 and through a communication circuitry of the display assistant device 106). In some implementations, the mobile device 104 or display assistant device 106 includes program modules that can control the home devices 108 without user interaction. For example, program modules installed on the mobile device 104 can control the electronic device 102 to update its battery settings based on its local environment. As another example, when the electronic device 102 is a doorbell camera or a surveillance camera, it may store video data locally and wirelessly stream video data to the mobile device 104 or the display assistant device 106 via one or more communication networks 160 and/or the local network 150.

In some implementations, at least a subset of the connected devices 102-108 are also communicatively coupled to the server system 110 through the one or more communication networks 160. The server system 110 includes one or more of: an information storage database 172, a device and account database 174, and connected device processing modules 176. For example, when the electronic device 102 is an outdoor camera, it may stream video data to the server system 110 via the communication networks 160 for storage in the information storage database 172 or for additional processing by the connected device processing module 176 of the server system 110. The user may access the stored video data using the mobile device 104 or the display assistant device 106 via the one or more communication networks 160.

In some implementations, the user establishes a user account (e.g., a Google^{™} user account) with the server system 110 and associates (e.g., adds and/or links) one or more connected devices 102-108 with the user account. The server system 110 stores information for the user account and associated devices 102-108 in the device and account database 174. The server system 110 enables the user to control and monitor information from the home devices 108 via the connected device processing module 176 (e.g., using an application executing on the mobile device 104 or assistant capabilities of some of the home devices 108). The user can also link the mobile device 104 or display assistant device 106 to one or more of the home devices 108 via the user account. This allows program modules executed on the mobile device 104 or display assistant device 106 (e.g., a doorbell camera program) to receive sensor data and other information collected by the home devices 108 (e.g., the electronic device 102 including a doorbell camera) via the server system 110, or send commands via the server system 110 to the home devices 108.

In some implementations, the electronic device 102 includes memory 122, one or more processing units (e.g., CPUs, ASICs, FPGAs, microprocessors, and the like) 124, one or more communication circuitry 126, and one or more communication buses (not shown) for interconnecting these components (sometimes called a chipset). The communication circuitry 126 include, for example, hardware capable of data communications using any of a variety of custom or standard wireless protocols (e.g., IEEE 802.15.4, Wi-Fi, ZigBee, 6LoWPAN, Thread, Z-Wave, Bluetooth Smart, ISA100.5A, WirelessHART, MiWi, etc.) and/or any of a variety of custom or standard wired protocols (e.g., Ethernet, HomePlug, etc.), or any other suitable communication protocol, including communication protocols not yet developed as of the filing date of this document. In some implementations, the electronic device 102 includes one or more output devices that enable presentation of media content, including one or more speakers 128 and/or one or more visual displays (e.g., a light ring formed on a periphery of a front cover plate, a button or a camera lens opening of a doorbell camera). In some implementations, the electronic device 102 also includes one or more sensors 130, including one or more motion sensors 134, a temperature sensor 136, and an ambient light sensor 138, and user interface components that facilitate user input such as a voice-command input unit or microphone 132, a touch screen display, a touch-sensitive input pad, a gesture capturing camera, a doorbell button or other input buttons or controls. In some implementations, the electronic device 102 includes one or more image/video capture devices 140 (e.g., cameras, video cameras, scanners, photo sensor units).

The memory 122 includes high-speed random access memory, such as DRAM, SRAM, DDR RAM, or other random access solid state memory devices; and, optionally, includes non-volatile memory, such as one or more magnetic disk storage devices, one or more optical disk storage devices, one or more flash memory devices, or one or more other non-volatile solid state storage devices. The memory 122, or alternatively the non-volatile memory within the memory 122, includes a non-transitory computer readable storage medium. In some implementations, the memory 122, or the non-transitory computer readable storage medium of the memory 122, stores the following programs, modules, and data structures, or a subset or superset thereof: operating logic including procedures for handling various basic system services and for performing hardware dependent tasks, a device communication module for connecting to and communicating with other network devices connected to one or more networks 160, an input processing module for detecting one or more user inputs or interactions from the one or more input devices and interpreting the detected inputs or interactions, and a user interface module for providing and displaying a user interface in which settings, captured data, and/or other data for one or more devices can be configured and/or viewed.

The electronic device 102 includes a rechargeable battery 142 and a charger 144. In some implementations, the electronic device 102 (e.g., a wireless camera) is not connected to an external power source (e.g., household electricity), and instead is powered by the rechargeable battery 142 to implement its intended functions (e.g., capturing images). In some implementations, the electronic device 102 is physically connected to an external power source, which is employed by the device 102 to charge the rechargeable battery 142 via the charger 144. The battery 142 is coupled to a battery protection system and an external logic board. The battery protection circuit is configured to protect the battery 142 under an overvoltage, undervoltage, overcurrent, or short circuit condition, and the external logic board has circuit modules (e.g., the charger 144) configured to manage charging and discharging of the battery 142 and, in some embodiments, monitor and control a temperature of the battery 142. The memory 122 stores a battery charging module 182 for controlling a charging process of the rechargeable battery 142 implemented by the charger 144 on the external logic board. In some implementations, during normal operation, a state of charge of the rechargeable battery 142 is displayed on a user interface of a client device (e.g., the mobile device 104) that executes an application associated with the electronic device 102. When the state of charge of the rechargeable battery 142 drops below a first battery recharge threshold (e.g., when the state of charge is below 10%), the client device may receive a notification indicating that the state of charge of the rechargeable battery 142 is low, and the rechargeable battery needs to be coupled to the external power source to be charged shortly.

Alternatively, in some implementations, the electronic device 102 is connected to the external power source while implementing its intended functions. The rechargeable battery 142 may be used to provide power to a subset of the intended functions of the electronic device 102 while the external power source is connected. The rechargeable battery 142 may also power the entire electronic device 102 when the electronic device 102 is briefly disconnected from the external power source. For example, a doorbell camera is constantly connected to house power via a transformer. The house power powers the entire doorbell camera when a button of the doorbell camera is not pressed. However, the house power is used to power a chimer and a doorbell system in response a user press on a button of the doorbell camera, and the rechargeable battery 142 is used to power a camera system 140 of the doorbell camera concurrently. That said, the rechargeable battery 142 of the doorbell camera may be connected to the external power source for a significant portion (e.g., >95%) of an entire operation time of the doorbell camera, except when the button of the doorbell camera is pressed.

In some situations, a rechargeable battery 142 that is connected to the external power source is charged at a corresponding charge rate to keep the rechargeable battery 142 at a fully charged level (e.g., at an upper limit of the state of charge). Alternatively, in some situations, when it is determined that the state of charge of the rechargeable battery 142 drops below a second battery recharge threshold (e.g., when the state of charge is below 1%), the rechargeable battery 142 that is connected to the external power source starts to be continuously charged to the fully charged level (e.g., which matches the upper limit of the state of charge),. The battery charging module 182 includes instructions for controlling charging of the rechargeable battery 142.

In various implementations of this application, the electronic device 102 is located outdoors, e.g., fixed at a specific outdoor location, and can be exposed to a wide range of weather conditions corresponding to different geographic locations where the electronic device 102 may be placed. The memory 122 stores a battery provisioning module 184 including instructions for implementing a location-based battery provisioning method. That said, when the electronic device 102 is being installed at a specific geographic location, it obtains geolocation information of the geographic location (e.g., a city name, a zip code, a distance from a major city, an IP address). The electronic device 102 also obtains outdoor temperature information (e.g., historical outdoor temperature information) of the geographic location based on the geolocation information of the outdoor electronic device. In some situations, the outdoor temperature information is stored in an outdoor temperature database 186 of memory 122 of the electronic device 102, and the electronic device 102 loads the outdoor temperature information from the memory 122 during the course of device installation and initialization. The electronic device 102 determines a battery setting of a rechargeable battery 142 (e.g., an upper limit for a state of charge) based on the outdoor temperature information, and provisions the rechargeable battery 142 with the battery setting of the rechargeable battery 142. For example, the electronic device 102 sets the upper limit of the state of charge to 80% and 60% for its rechargeable battery 142 if the electronic device is used in San Francisco and Phoenix, respectively. During normal operation, under the control of the battery charging module 182, the rechargeable battery 142 of the electronic device 102 is charged by an external power source to a battery charge voltage that matches the upper limit of the state of charge, and this battery charge voltage is therefore customized according to the geographic location of the electronic device 102.

In some implementations, the memory 122 stores a battery setting adjustment module 188 including instructions for updating battery settings of the rechargeable battery of the electronic device 102 after installation and during normal operation. For example, when the outdoor temperature information is updated in the outdoor temperature database 186, the battery setting of the rechargeable battery 142, which was determined during device provisioning, is updated accordingly. Alternatively, in some implementations, a local environment of the electronic device 102 can be monitored, and the battery setting (e.g., the upper limit of the state of charge) is updated according to the local environment. In some implementations, the memory 122 stores a battery setting lookup table or formula 190. Given the outdoor temperature information (e.g., historical outdoor temperature information) and the local environment of the electronic device 102, the battery setting of the rechargeable battery 142 is determined using the battery setting lookup table or formula 190 during device provisioning and subsequent updates.

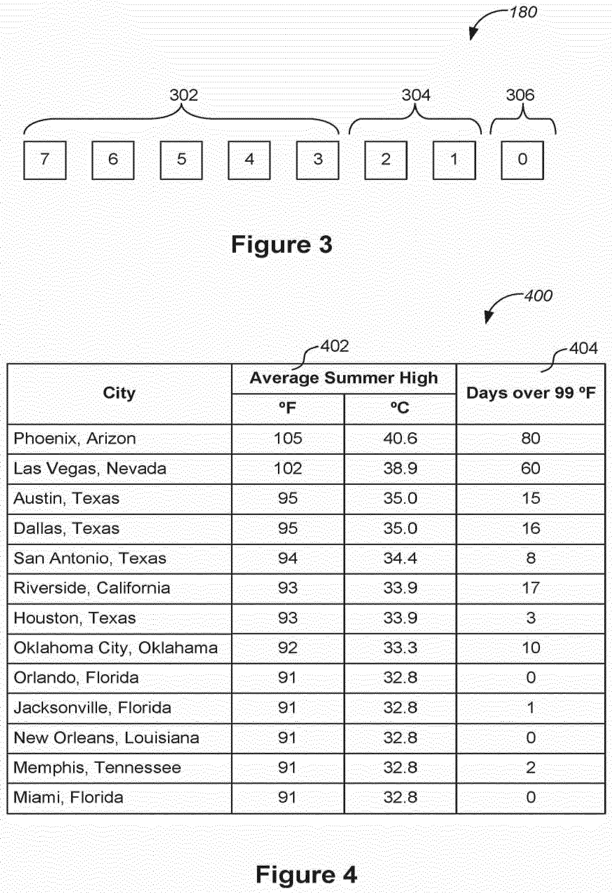

The memory 122 of the electronic device 102 further includes a battery setting register 180 for storing one or more battery settings (e.g., a battery voltage setting 302, a top-off timer setting 304, and a battery recharge threshold 306 in Figure 3). At least one of the one or more battery settings is provisioned or updated based on the geographic location of the electronic device 102. Further, in some situations, the one of the one or more battery settings is provisioned or updated based on a season or month of a year as well. In some situations, at least one of the battery settings is updated based on a combination of a color of the electronic device 102 and the geographic location of the electronic device 102. For example, an electronic device 102 of a dark color (e.g., black) can be exposed to an internal device temperature that is 8 °C higher than the same electronic device 102 of a light color (e.g., white), because the dark color has a greater solar radiation absorption rate than the light color.

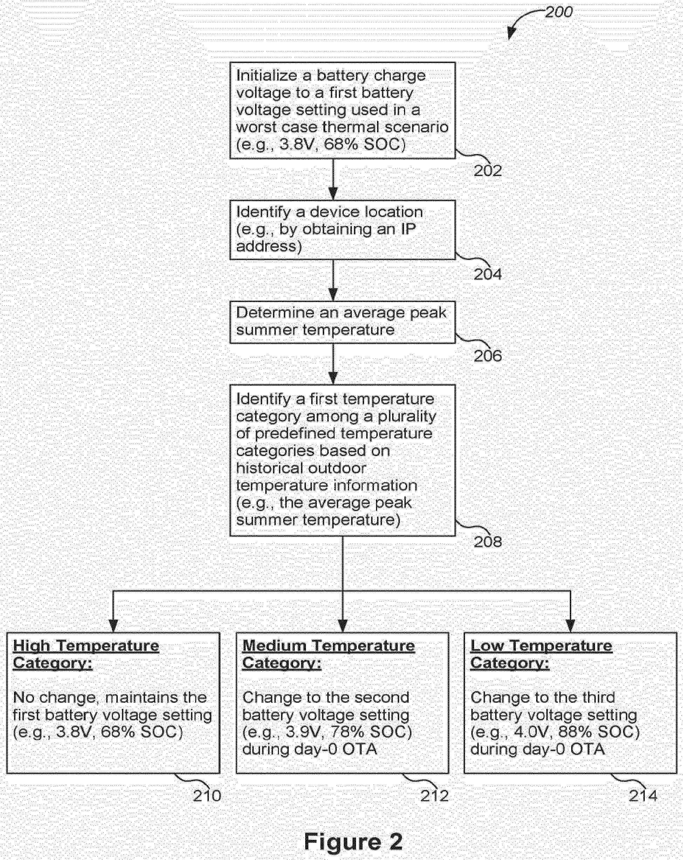

Figure 2 is a flowchart of an example process 200 for provisioning a rechargeable battery 142 of an electronic device 102 located at a geographic location, in accordance with some implementations. The electronic device 102 initializes (202) a battery charge voltage to a first battery voltage setting used in a worst case thermal scenario, e.g., used in Phoenix, Arizona, which is the hottest city of the United States. In an example, the battery charge voltage is 3.8 V and corresponds to a state of charge up to 68% according to the first battery voltage setting. The electronic device 102 identifies (204) a device location by obtaining an IP address of the outdoor electronic device 102 on the one or more communication networks 160 and determining the geolocation information of the geographic location based on the IP address of the electronic device 102. The geolocation information of the geographic location includes, but is not limited to, longitude and altitude, a city name, a zip code, and a distance from a known city. A format of the geolocation information of the geographic location depends on how outdoor temperature information (e.g., historical outdoor temperature information) is stored in the outdoor temperature database 186 in association with different geographic locations.

The electronic device 102 obtains the outdoor temperature information of the geographic location based on the geolocation information of the electronic device 102, e.g., from the outdoor temperature database 186. In some implementations, the outdoor temperature information includes historical data of a peak summer temperature, e.g., an average peak summer temperature during the past five years. The electronic device 102 extracts the historical data of the peak summer temperature related to the geographic location and determines (206) the average peak summer temperature based on the historical data of the peak summer temperature. Alternatively, in some implementations, the outdoor temperature information includes historical data of a peak seasonal or monthly temperature, e.g., an average peak seasonal or monthly temperature. The electronic device 102 extracts the historical data of the peak seasonal or monthly temperature related to the geographic location, and determines the average peak seasonal or monthly temperature based on the historical data of the peak seasonal or monthly temperature.

Further, in some implementations, the electronic device 102 identifies (208) a first temperature category among a plurality of predefined temperature categories based on the outdoor temperature information. Each of the plurality of predefined temperature category corresponds to a respective one of a plurality of upper limit levels for a state of charge of the rechargeable battery 142, and these correlations are stored as a battery setting lookup table or formula 190 of the memory 122 of the electronic device 102. In an example, the plurality of predefined temperature categories includes three predefined temperature categories (e.g., a high temperature category, a medium temperature category, and a low temperature category). The high temperature category corresponds to the first battery voltage setting, and the rechargeable battery 142 is allowed to be charged to the battery charge voltage of 3.8 V and have a state of charge up to 68% according to the first battery voltage setting. The medium temperature category corresponds to a second battery voltage setting, and the rechargeable battery 142 is allowed to be charged to the battery charge voltage of 3.9 V and have a state of charge up to 78% according to the second battery voltage setting. The low temperature category corresponds to a third battery voltage setting, and the rechargeable battery 142 is allowed to be charged to the battery charge voltage of 4.0 V and have a state of charge up to 88% according to the third battery voltage setting. In some situations, the first temperature category is identified based partially on a season or a month when the rechargeable battery is provisioned, and the upper limit for the state of charge and the battery charge voltage of the rechargeable battery 142 are determined based partially on the season or month as well.

The plurality of predefined temperature categories are defined according to one or more temperature thresholds. For example, if the average peak summer temperature of the geographic location is greater than a first temperature threshold (e.g., 95 °F or 35 °C), the high temperature category is identified for the electronic device 102. If the average peak summer temperature of the geographic location is less than a second temperature threshold (e.g., 82 °F or 28 °C), the low temperature category is identified for the electronic device 102. Conversely, if the average peak summer temperature of the geographic location is within a range defined by the first and second temperature thresholds, the medium temperature category is identified for the electronic device 102.

In some implementations, the electronic device 102 identifies (210) the first temperature category as the high temperature category based on the outdoor temperature information, and therefore, maintains the first battery voltage setting that sets the battery charge voltage as 3.8 V and an upper limit of the state of charge as 68%. Alternatively, in some implementations, the electronic device 102 identifies (212) the first temperature category as the medium temperature category based on the outdoor temperature information, and therefore, changes to the second battery voltage setting that sets the battery charge voltage as 3.9 V and an upper limit of the state of charge as 78%. Alternatively, in some implementations, the electronic device 102 identifies (214) the first temperature category as the low temperature category based on the outdoor temperature information, and therefore, changes to the third battery voltage setting that sets the battery charge voltage as 4.0 V and an upper limit of the state of charge as 88%.

It is noted that the rechargeable battery 142 is provisioned with the upper limit for the state of charge of the rechargeable battery 142 at each time of installing and initializing the electronic device 102. This is implemented for each individual electronic device 102, and implemented when the electronic device is installed for the first time or moved to a new geographic location. In the absence of this individualized provisioning process, the electronic device 102 may operate with a default battery setting (e.g., the first battery charge voltage), regardless of where the electronic device 102 is installed. By implementing the process 200, an electronic device 102 that is shipped to a location associated with the low or medium temperature category does not have to adopt the first battery charge voltage, and can operate with a higher battery charge voltage without having a shortened device runtimes or requiring frequent battery charging. Stated another way, the electronic device 102 associated with the low or medium temperature category does not have to compromise its performance because other electronic devices 102 need to be shipped to a location associated with the high temperature category, i.e., the worst case thermal scenario.

Figure 3 illustrates an example battery setting register 180 that stores a plurality of battery settings, in accordance with some implementations. The battery setting register 180 includes 8 bits. The plurality of battery settings includes a battery voltage setting 302, a top-off timer setting 304, and a battery recharge threshold 306. Bits 3-7 of the battery setting register 180 define the battery voltage setting 302, and the rechargeable battery 142 is allowed to be fully charged to a battery charge voltage according to the battery voltage setting 302. Bits 3-7 can provide 32 battery voltage settings, and examples of the battery voltage setting 302 include, but are not limited to, 4.2 V, 3.594 V, 3.6 V, 3.696 V, and 4.5 V. An example resolution of the battery voltage setting 302 is 10 mV. Bits 1 and 2 of the battery setting register 180 define the top-off timer setting 304, i.e., how long the rechargeable battery 142 can be further charged after it has reached its battery charge voltage as defined by bits 3-7. In some implementations, bits 1 and 2 of the battery setting register 180 selects one of four predefined timer settings, e.g., disabled, 15 minutes, 30 minutes, 45 minutes. Bit 0 of the battery setting register 180 defines the battery recharge threshold 306 as one of two predefined rechargeable thresholds. In some implementations, the two predefined rechargeable thresholds includes 210 mV and 120 mV. When the electronic device 102 is connected to an external power source, the rechargeable battery initiates a recharge when a charger 144 coupled to the battery 142 detects that a battery voltage supplied by the rechargeable battery 142 drops by the battery recharge threshold. Alternatively, in some implementations not shown in Figure 3, the battery rechargeable threshold is set to a percentage value (e.g., 80%). When the electronic device 102 is connected to an external power source, the battery 142 initiates a recharge when the charger 144 coupled to the battery 142 detects that the battery voltage supplied by the rechargeable battery 142 drops to a battery supply or charge voltage corresponding to the percentage value of a fully charged level, i.e., the battery charge voltage defined according to bits 3-7 of the battery setting register 180.

In some implementations, the battery voltage setting of the rechargeable battery 142, which is stored in bits 3-7 of the battery setting register 180, is provisioned based on a geographic location of the electronic device 102. The battery voltage setting is selected from a plurality of battery voltage options (e.g., the first, second and third battery charge voltages in Figure 2). Each battery voltage option corresponds to a respective upper limit of a state of charge for the rechargeable battery 142. In some implementations, the battery rechargeable threshold or the top-off timer setting of the rechargeable battery 142 is provisioned based on the geographic location of the electronic device 102.

Figure 4 is an example table 400 showing a historical average peak summer temperature in some U.S. cities, in accordance with some implementations. In some implementations, outdoor temperature information used to determine a battery setting of the rechargeable battery 142 includes a historical average peak summer temperature. The electronic device 102 stores a plurality of historical average peak summer temperatures of a plurality of geographic locations in memory 122 in an outdoor temperature database 186 of memory 122. For example, referring to Figure 4, the electronic device 102 stores the average peak summer temperatures in Celsius (°C) and Fahrenheit (°F) for a selected number of U.S. cities, which have the highest normal daily maximum temperatures in June, July and August. The electronic device 102 stores the average peak summer temperatures 402 for the selected number of U.S. cities, because the average peak summer temperatures reach such high levels that may impact a battery life of the rechargeable battery 142. In some implementations, when the geographic location of the electronic device 102 satisfies a location criterion (e.g., at a listed U.S. city, or within a certain distance from a listed U.S. city), the battery setting of the electronic device 102 is determined based on the geographic location. Conversely, when the electronic device 102 does not satisfy the location criterion (e.g., neither at a listed U.S. city nor within a certain distance from any listed U.S. city), the battery setting of the electronic device 102 is determined to a default, e.g., the third battery voltage setting in Figure 2.

In some implementations, the outdoor temperature information stored in the outdoor temperature database 186 further includes numbers of days over a predefined temperature 404 (e.g., 99 °F) for the selected number of U.S. cities. The battery setting of the electronic device 102 is adjusted according to a number of days over the predefined temperature 404 at the geographic location of the electronic device 102. For example, both Riverside, California and Houston, Texas have an average peak summer temperature of 93 °F, while Riverside, California has 17 days above 99 °F and Houston, Texas has 3 days above 99 °F. The battery setting of the electronic device 102 is optionally modified according to the numbers of days over the predefined temperature. That said, the electronic device 102 located in Riverside, California is provisioned with a lower upper limit for a state of charge than the electronic device 102 located in Houston, Texas to accommodate the excessive number of days over 99 °F in Riverside, California.

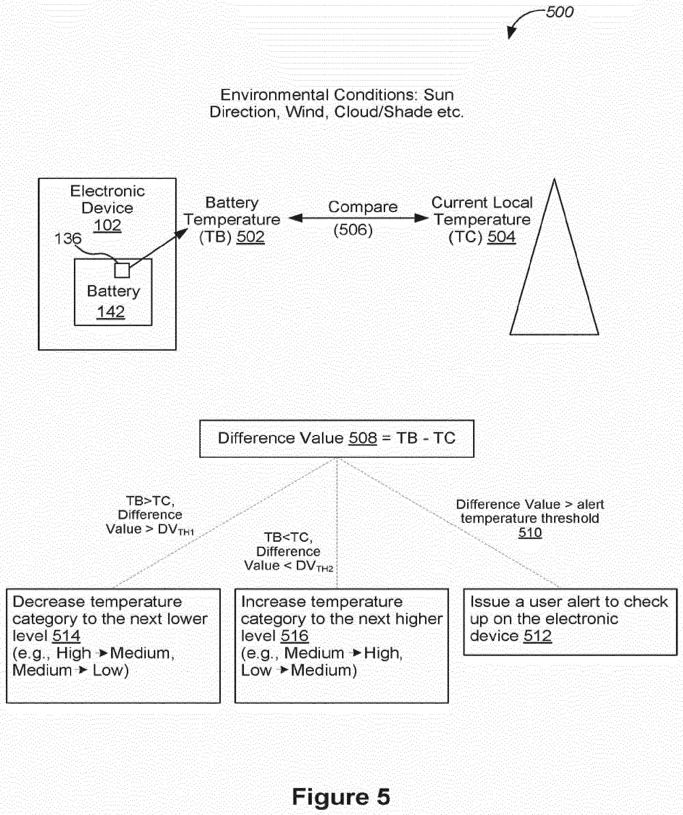

Figure 5 is a flowchart of an example process 500 for adjusting a battery setting during normal operation of an electronic device 102, in accordance with some implementations. Additional environmental variables (e.g., shade, wind, and sun direction) may contribute to a local environment of the electronic device 102. The process 500 provides a personalized device learning option which adjusts one or more battery settings (e.g., an upper limit for a state of charge) based on a battery temperature 502 measured from a temperature sensor 136 of the electronic device 102. Specifically, the electronic device 102 compares the measured battery temperature 502 with a current local temperature 504 provided by a regional weather station to determine how to adjust the one or more battery settings.

In some implementations, the temperature sensor 136 of the electronic device 102 is a battery temperature sensor configured to measure the battery temperature 502. The current local temperature 504 of the geographic location is obtained from a remote server via the one or more communication networks 160. Optionally, the remote server is associated with the regional weather station, and the electronic device 102 directly obtains the current local temperature 504 from an information source associated with the regional weather station. Optionally, the remote server includes the server system 120 that is associated with the electronic device 102 and configured to obtain the current local temperature and transfer the current local temperature 504 to the electronic device 102. The measured battery temperature 502 is compared (506) with the current local temperature 504 to determine a difference value 508 between the battery temperature 502 and current local temperature 504. The upper limit for the state of charge is adjusted for the rechargeable battery 142 based on the difference value 508. In some implementations, it is determined that the battery temperature 502 is greater than the current local temperature 504 and that the difference value 508 is greater (510) than an alert temperature threshold. The electronic device 102 generates (512) an alert message indicating that the electronic device 102 needs to be checked.

In some situations, the measured battery temperature 502 is greater than the current local temperature 504, and the different value 508 is positive. If the different value 508 is greater than a first difference threshold DV_{TH1}, the rechargeable battery 142 is heated up due to the local environment (e.g., direct sun exposure), and the upper limit of the state of charge is reduced (514) such that the rechargeable battery 142 is charged to a lower battery charge voltage to avoid battery swelling. Conversely, if the different value 508 is not greater than a first difference threshold, the impact of the local environment is negligible, and the upper limit of the state of charge and battery charge voltage remain as previously provisioned or adjusted.

Alternatively, in some situations, the measured battery temperature 502 is less than the current local temperature 504, and the different value 508 is negative. If the different value 508 is less than a second difference threshold DV_{TH2}, the rechargeable battery 142 is cooled down due to the local environment (e.g., a shade shield), and the upper limit of the state of charge is increased (516) such that the rechargeable battery 142 is charged to a higher battery charge voltage to extend a battery runtime and reduce a battery recharge frequency. Conversely, if the different value 508 is equal to or greater than the second difference threshold DV_{TH2}, the impact of the local environment is negligible, and the upper limit of the state of charge and battery charge voltage remain as previously provisioned or adjusted. Absolute values of the first and second difference thresholds DV_{TH1} and DV_{TH2} are optionally equal to each other, or independent of each other.

Further, in some implementations, the outdoor temperature information corresponds to a first temperature category among a sequence of ordered temperature categories (e.g., high, medium, and low temperature categories in Figure 2). The upper limit for the state of charge is a first upper limit that corresponds to the first temperature category and is selected from a plurality of upper limit levels associated with the sequence of ordered temperature categories. When the difference value 508 exceeds a temperature difference threshold DV_{TH1} or DV_{TH2}, the battery setting of the rechargeable battery 142 is adjusted from the first upper limit of the state of charge corresponding to the first temperature category to a second upper limit of the state of charge corresponding to a second temperature category that is immediately next to first temperature category in the sequence of ordered temperature categories. Referring to Figure 2, the high and medium temperature categories are immediately next to each other, and the medium and low temperature categories are immediately next to each other in a corresponding sequence of ordered temperature categories.

More specifically, if the measured battery temperature 502 is greater than the current local temperature 504 and the difference value 508 exceeds (i.e., is greater than) the first difference threshold DV_{TH1}, the first upper limit of the state of charge is reduced to the second upper limit of the state of charge, and the corresponding battery charge voltage of the rechargeable battery is reduced as well. If the measured battery temperature 502 is less than the current local temperature 504 and the difference value 508 exceeds (i.e., is less than) the second difference threshold DV_{TH2}, the first upper limit of the state of charge is increased to the second upper limit of the state of charge, and the corresponding battery charge voltage of the rechargeable battery is increased as well.

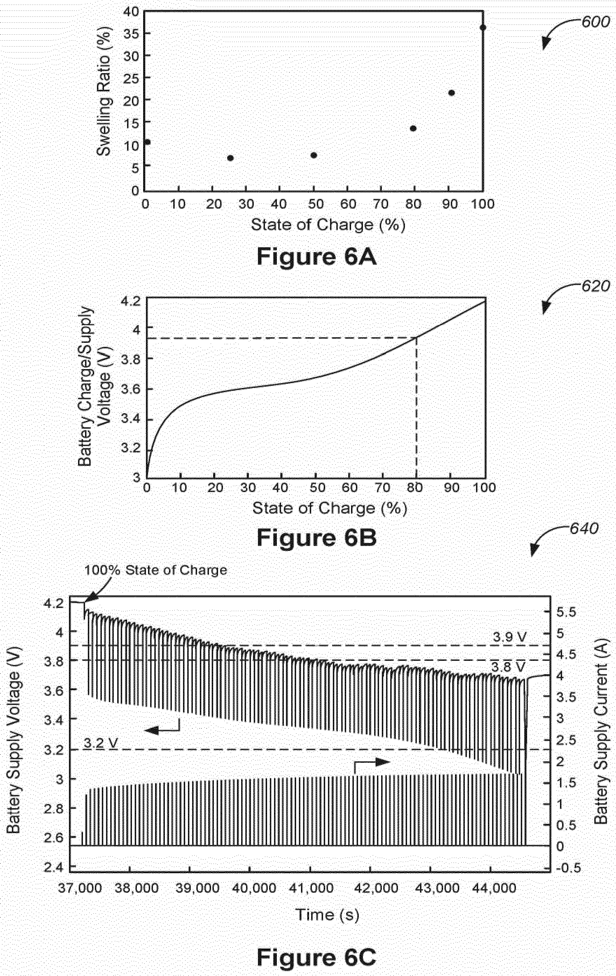

Figure 6A is a chart 600 correlating a battery swelling ratio and a state of charge of a rechargeable battery 142, in accordance with some implementations. Figure 6B is a chart 620 correlating a battery charge voltage and a state of charge of a rechargeable battery 142, in accordance with some implementations. Figure 6C is a temporal diagram 640 of a battery supply voltage and a battery supply current of a rechargeable battery 142, in accordance with some implementations. The battery swelling ratio increases with increasing state of charge of the rechargeable battery 142 when the state of charge is greater than 20%. In particular, the rechargeable battery 142 swells at a faster rate when the state of charge increases, particularly when the state of charge is greater than 80%. In some implementations, the electronic device 102 is designed to have a device enclosure that can accommodate a maximum battery swelling ratio (e.g., 15%), and the maximum battery swelling ratio corresponds to an upper limit for the state of charge (e.g., 80%). The battery charge voltage is set accordingly to be consistent with the upper limit for the state of charge. Referring to Figure 6B, when the state of charge is 80%, the battery charge voltage to which the rechargeable battery 142 can be recharged is approximately 3.92 V. As the state of charge gradually drops during operation of the electronic device 102, a battery supply voltage of the rechargeable battery 142 drops with the state of charge of the rechargeable battery 142, until the battery supply voltage cannot sustain the operation of the electronic device 102. Referring to Figure 6C, each voltage pulse represents a single event performed by the electronic device 102 (e.g. repetitive doorbell chimes). There is a reduction of consecutive events prior to reaching a battery shutdown voltage (e.g., 3.2 V), when the battery charge voltage decreases from 3.9 V (e.g., in SF) down to 3.8 V (e.g. in Phoenix).

For each electronic device 102, the rechargeable battery 142 is provisioned with the upper limit for the state of charge of the rechargeable battery 142 based on a geographic location of the electronic device 102 at each time of installing and initializing the outdoor electronic device 102. This happens when the electronic device 102 is newly taken out of box or moved to a new geolocation. During normal operation, the rechargeable battery 142 of the electronic device 102 is charged up to the upper limit for the state of charge, i.e., to a battery charge voltage. The upper limit for the state of charge of the rechargeable battery can be updated periodically (e.g., once a week) or upon request during normal operation. In some implementations, memory 122 of the electronic device 102 stores a plurality of outdoor temperatures in association with a plurality of known geographic locations (e.g., in Figure 4). For each electronic device, the outdoor temperature information of the corresponding geographic location includes one of the plurality of outdoor temperatures. When the plurality of outdoor temperatures is updated for the plurality of known geographic locations that is stored in the memory 122, the upper limit for the state of charge is updated for the rechargeable battery 142 of the electronic device 102, and the rechargeable battery 142 continues to be charged according to the updated upper limit. By these means, the battery settings (e.g., the upper limit for the state of charge, the battery charge voltage) are customized for each electronic device 102 based on its geographic location.

Conversely, in some prior art implementations, worst case operating conditions are universally applied to cover all normal customer use scenarios and corner cases across different geographic locations. For example, when designing an outdoor battery powered product for the U.S. market, when considering the thermal impact, the average peak summer temperature (~40 °C) in Phoenix, Arizona is often used as a worst case thermal scenario, in combination with maximum solar irradiance, and peak device operation. This design would be ideal for only a small percentage of customers living in the most extreme conditions, while the remaining customers located in milder temperature regions (e.g., in San Francisco) would be negatively impacted by reduced battery performance. In some implementations, a doorbell camera has a battery charge voltage set to a single fixed setting, and all users are exposed to the same reduced runtime impact. Given the large average peak temperature variation across the U.S., a battery charge voltage needs to be reduced down to 3.8 V (~ 68% state of charge) in Phoenix, while in San Francisco with a milder temperature, a battery charge voltage of 3.9 V (~ 78% state of charge) is sufficient to meet the same battery swelling speciation requirement. A difference of these two battery charge voltages corresponds to ~10% runtime loss for users in San Francisco due to using a single design that accommodates the worst case high temperature impact in Phoenix.

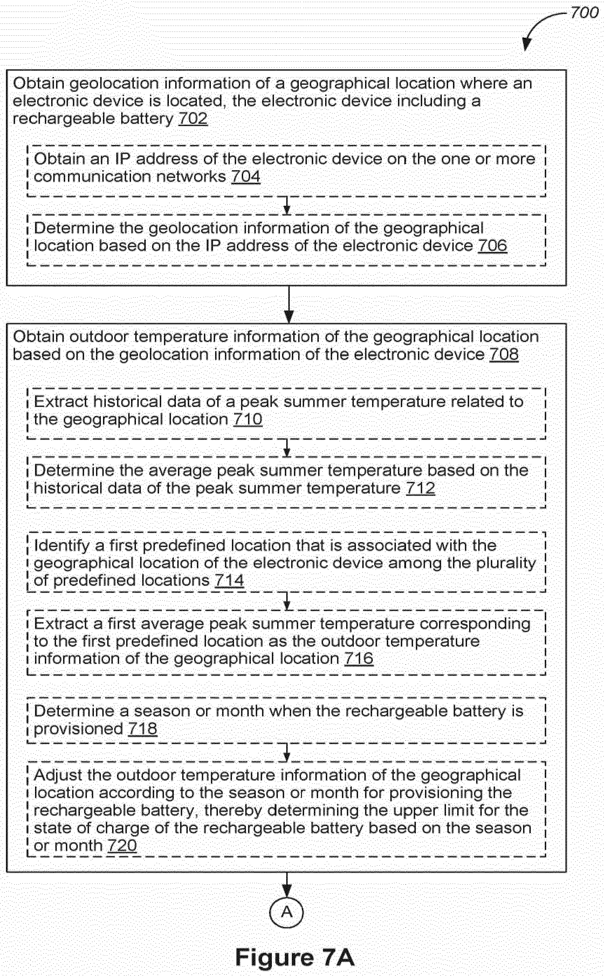

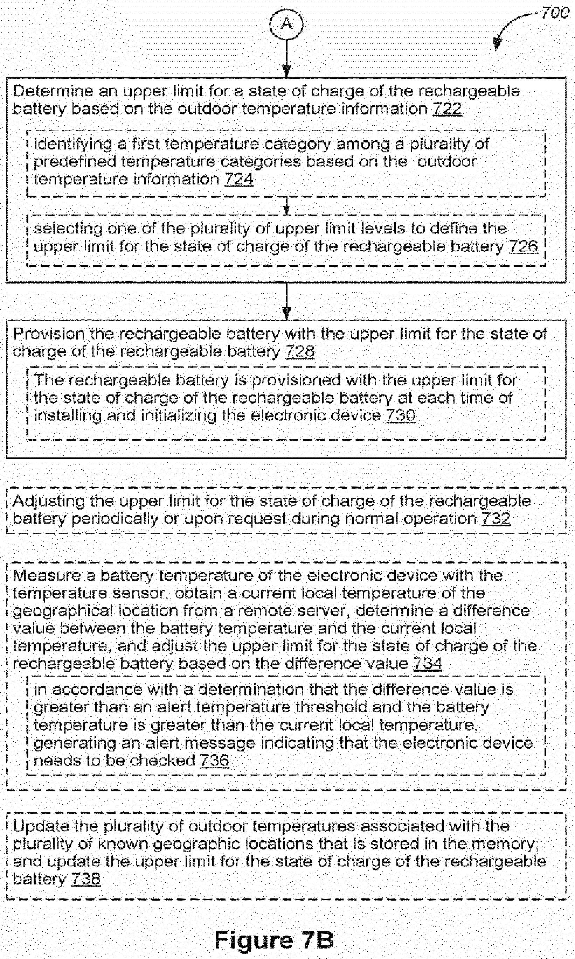

Figures 7A and 7B illustrate a flow diagram of a battery provisioning method 700, in accordance with some implementations. Method 700 is, optionally, governed by instructions that are stored in a non-transitory computer readable storage medium (e.g., memory 122 in Figure 1) and that are executed by one or more processors of an electronic device 102. The computer readable storage medium may include a magnetic or optical disk storage device, solid state storage devices such as Flash memory, or other non-volatile memory device or devices. The computer readable instructions stored on the computer readable storage medium may include one or more of: source code, assembly language code, object code, or other instruction format that is interpreted by one or more processors. Some operations in method 700 may be combined and/or the order of some operations may be changed. The electronic device 102 is disposed in an outdoor environment, and includes a rechargeable battery 142. Optionally, the electronic device 102 is disconnected from an external power source and entirely powered by the rechargeable battery 142, which can be charged when the electronic device 102 is connected to the external power source. Optionally, the electronic device 102 is constantly connected to the external power source and charged at a charge rate to keep the rechargeable battery 142 at a fully charged level (e.g., at an upper limit of the state of charge corresponding to a battery charge voltage).

The electronic device 102 obtains (702) geolocation information of a geographic location where the electronic device 102 is located. In some implementations, the electronic device 102 obtains (704) an IP address of the electronic device 102 on one or more communication networks 160, and determines (706) the geolocation information of the geographic location based on the IP address of the electronic device 102.

The electronic device 102 obtains (708) outdoor temperature information (e.g., historical outdoor temperature information) of the geographic location based on the geolocation information of the electronic device. In some implementations, the outdoor temperature information of the geographic location includes an average peak summer temperature. The electronic device 102 extracts (710) historical data of a peak summer temperature related to the geographic location, and determines (712) the average peak summer temperature based on the historical data of the peak summer temperature. In some implementations, the electronic device 102 includes memory 122 for storing a plurality of average peak summer temperatures in association with a plurality of predefined locations, e.g., in an outdoor temperature database 186. The electronic device 102 identifies (714) a first predefined location that is associated with the geographic location of the electronic device among the plurality of predefined locations, and extracts (716) a first average peak summer temperature corresponding to the first predefined location as the outdoor temperature information of the geographic location. In some implementations, the electronic device 102 determines (718) a season or a month when the rechargeable battery is provisioned and adjusts (720) the outdoor temperature information of the geographic location according to the season for provisioning the rechargeable battery, thereby determining the upper limit for the state of charge of the rechargeable battery based on the season or month.

The electronic device 102 determines (722) a battery setting (e.g., an upper limit for a state of charge and a battery charge voltage) of the rechargeable battery 142 based on the outdoor temperature information. In some implementations, the electronic device 102 identifies (724) a first temperature category among a plurality of predefined temperature categories based on the outdoor temperature information, and each predefined temperature category corresponds to a respective one of a plurality of upper limit levels. The electronic device 102 selects (726) one of the plurality of upper limit levels to define the upper limit for the state of charge of the rechargeable battery 142, and the selected one of the plurality of upper limit levels corresponding to the first temperature category. More details on determining the battery setting based on temperature categories are explained above with reference to Figure 2.

The electronic device 102 provisions (728) the rechargeable battery 142 with the battery setting (e.g., the upper limit for the state of charge and the battery charge voltage) of the rechargeable battery 142. In some implementations, the rechargeable battery 142 is provisioned with the upper limit for the state of charge of the rechargeable battery 142 at each time of installing and initializing the electronic device 102 (730). During normal operation, the rechargeable battery 142 of the electronic device 102 is charged up to the upper limit for the state of charge. The upper limit for the state of charge of the rechargeable battery 142 is adjusted (732) periodically or upon request during normal operation.

In some implementations, the electronic device 102 includes a temperature sensor 136. The electronic device 102 measures (734) a battery temperature 502 of the electronic device with the temperature sensor 136, obtains a current local temperature 504 of the geographic location from a remote server, determines a difference value 508 between the battery temperature and the current local temperature, and adjusts the upper limit for the state of charge of the rechargeable battery based on the difference value. Further, in some implementations, the outdoor temperature information corresponds to a first temperature category among a sequence of ordered temperature categories. The upper limit for the state of charge is a first upper limit that corresponds to the first temperature category and is selected from a plurality of upper limit levels associated with the sequence of ordered temperature categories. In accordance with a determination that the difference value exceeds a temperature difference threshold, the electronic device 102 adjusts the upper limit from the first upper limit corresponding to the first temperature category to a second upper limit corresponding to a second temperature category that is immediately next to first temperature category in the sequence of ordered temperature categories. More details on adjusting the battery setting based on a local environment of the electronic device 102 are discussed above with reference to Figure 5.

In some implementations, in accordance with a determination that the difference value 508 is greater than an alert temperature threshold and the battery temperature 502 is greater than the current local temperature 504, the electronic device 102 generates (736) an alert message indicating that the electronic device 102 needs to be checked.

In some implementations, the electronic device 102 includes memory 122 for storing a plurality of outdoor temperatures in association with a plurality of known geographic locations, e.g., in an outdoor temperature database 186. The outdoor temperature information of the geographic location includes one of the plurality of outdoor temperatures. The electronic device 102 updates (e.g., downloads from a server system) (738) the plurality of outdoor temperatures associated with the plurality of known geographic locations that is stored in the memory 122. The upper limit is updated (738) for the state of charge of the rechargeable battery 142. The rechargeable battery 142 is configured to be charged according to the updated upper limit. As such, the upper limit for the state of charge of the rechargeable battery 142 corresponds to the battery charge voltage, and after battery provisioning or update, the rechargeable battery 142 is configured to be charged up to the battery charge voltage at each subsequent battery charge.

It should be understood that the particular order in which the operations in Figures 7A and 7B have been described are merely exemplary and are not intended to indicate that the described order is the only order in which the operations could be performed. One of ordinary skill in the art would recognize various ways to reorder the operations described herein. Additionally, it should be noted that details of other processes described herein with respect to methods 200 and 500 (e.g., Figures 2 and 5) are also applicable in an analogous manner to method 700 described above with respect to Figures 7A and 7B. For brevity, these details

The terminology used in the description of the various described implementations herein is for the purpose of describing particular implementations only and is not intended to be limiting. As used in the description of the various described implementations and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. Additionally, it will be understood that, although the terms "first," "second," etc. may be used herein to describe various elements, these elements should not be limited by these terms. These terms are only used to distinguish one element from another.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

The foregoing description, for purpose of explanation, has been described with reference to specific implementations. However, the illustrative discussions above are not intended to be exhaustive or to limit the claims to the precise forms disclosed. Many modifications and variations are possible in view of the above teachings. The implementations were chosen and described in order to best explain principles of operation and practical applications, to thereby enable others skilled in the art.

Although various drawings illustrate a number of logical stages in a particular order, stages that are not order dependent may be reordered and other stages may be combined or broken out. While some reordering or other groupings are specifically mentioned, others will be obvious to those of ordinary skill in the art, so the ordering and groupings presented herein are not an exhaustive list of alternatives. Moreover, it should be recognized that the stages can be implemented in hardware, firmware, software or any combination thereof.

## Claims

1. A battery provisioning method for an outdoor electronic device (102) when the outdoor electronic device (102) is initialized at a particular geographic location, comprising:
obtaining geolocation information of the geographic location where the outdoor electronic device (102) is located, the outdoor electronic device (102) including a rechargeable battery (142);
obtaining historical outdoor temperature information of the geographic location based on the geolocation information of the outdoor electronic device (102);
determining a battery setting including an upper limit for a state of charge of the rechargeable battery (142) based on the historical outdoor temperature information; and
provisioning the rechargeable battery (142) with the battery setting including the upper limit for the state of charge of the rechargeable battery (142), the rechargeable battery (142) to be charged up to the upper limit for the state of charge during operation.

2. The method of claim 1,
wherein determining the upper limit for the state of charge of the rechargeable battery (142) further comprises:
identifying, based on the historical outdoor temperature information, a first temperature category among a plurality of predefined temperature categories, each predefined temperature category being defined according to at least one temperature threshold and corresponding to a respective one of a plurality of upper limit levels; and
selecting, as the upper limit for the state of charge of the rechargeable battery (142), the upper limit level corresponding to the first temperature category.

3. The method of any of claims 1 and 2, wherein the outdoor electronic device (102) is configured to communicate via one or more communication networks (160).

4. The method of claim 3, wherein obtaining the geolocation information of the geographic location where the outdoor electronic device (102) is located further comprises:
obtaining an IP address of the outdoor electronic device (102) on the one or more communication networks (160); and
determining the geolocation information of the geographic location based on the IP address of the outdoor electronic device (102).

5. The method of any combination of claims 1-4, wherein the historical outdoor temperature information of the geographic location includes an average peak summer temperature (402), and obtaining the historical outdoor temperature information of the geographic location further comprises:
extracting historical data of a peak summer temperature related to the geographic location; and
determining the average peak summer temperature (402) based on the historical data of the peak summer temperature.

6. The method of any combination of claims 1-5, wherein the outdoor electronic device (102) includes memory (122) for storing a plurality of average peak summer temperatures (402) in association with a plurality of predefined locations, and obtaining the historical outdoor temperature information of the geographic location further comprises:
identifying a first predefined location that is associated with the geographic location of the outdoor electronic device (102) among the plurality of predefined locations; and
extracting a first average peak summer temperature (402) corresponding to the first predefined location as the historical outdoor temperature information of the geographic location.

7. The method of any combination of claims 1-6, further comprising:
determining a season when the rechargeable battery (142) is provisioned; and
determining the upper limit for the state of charge of the rechargeable battery (142) based on the season.

8. The method of any combination of claims 1-7, wherein the outdoor electronic device (102) includes a temperature sensor (136), the method further comprising:
measuring a battery temperature (502) of the electronic device with the temperature sensor;
obtaining a current local temperature (504) of the geographic location from a remote server;
determining a difference value (508) between the battery temperature and the current local temperature; and
adjusting the upper limit for the state of charge of the rechargeable battery (142) based on the difference value.

9. The method of claim 8, wherein:
the historical outdoor temperature information corresponds to a first temperature category among a sequence of ordered temperature categories, each temperature category being defined according to at least one temperature threshold;
the upper limit for the state of charge is a first upper limit that corresponds to the first temperature category and is selected from a plurality of upper limit levels associated with the sequence of ordered temperature categories; and
adjusting the upper limit for the state of charge of the rechargeable battery (142) further includes:
in accordance with a determination that the difference value exceeds a temperature difference threshold, adjusting the upper limit from the first upper limit corresponding to the first temperature category to a second upper limit corresponding to a second temperature category that is immediately next to first temperature category in the sequence of ordered temperature categories.

10. The method of claim 8 or 9, the method further comprising:
in accordance with a determination that the difference value is greater than an alert temperature threshold and the battery temperature is greater than the current local temperature, generating an alert message indicating that the electronic device needs to be checked.

11. An outdoor electronic device, including a rechargeable battery (142) and further comprising:
one or more processors (124); and
memory (122) having instructions stored thereon, which when executed by the one or more processors (124) when the outdoor electronic device (102) is initialized outdoors at a particular geographic location cause the processors (124) to:
obtain geolocation information of the geographic location where the outdoor electronic device (102) is located;
obtain historical outdoor temperature information of the geographic location based on the geolocation information of the outdoor electronic device (102);
determine a battery setting including an upper limit for a state of charge of the rechargeable battery (142) based on the historical outdoor temperature information; and
provision the rechargeable battery (142) with the battery setting including the upper limit for the state of charge of the rechargeable battery (142), the rechargeable battery (142) to be charged up to the upper limit for the state of charge during operation.

12. The outdoor electronic device of claim 11, wherein the instructions stored on the memory (122), when executed by the one or more processors (124) cause the processors (124) to perform any of the methods of claims 2-10.

13. A non-transitory computer-readable medium for an outdoor electronic device (102) including a rechargeable battery (142), the non-transitory computer-readable medium having instructions stored thereon, which when executed by one or more processors (124) when the outdoor electronic device (102) is initialized at a particular geographic location cause the processors (124) to
obtain geolocation information of the geographic location where the outdoor electronic (102) device is located;
obtain historical outdoor temperature information of the geographic location based on the geolocation information of the outdoor electronic device (102);
determine a battery setting including an upper limit for a state of charge of the rechargeable battery (142) based on the historical outdoor temperature information; and
provision the rechargeable battery (142) with the battery setting including the upper limit for the state of charge of the rechargeable battery (142), the rechargeable battery (142) to be charged up to the upper limit for the state of charge during operation.

14. The non-transitory computer-readable medium of claim 13, wherein the instructions stored thereon, when executed by the one or more processors (124) cause the processors (124) to perform any of the methods of claims 2-10.

## Patentansprüche

1. Verfahren zur Batteriebereitstellung für eine elektronische Außenvorrichtung (102), wenn die elektronische Außenvorrichtung (102) an einem bestimmten geografischen Standort initialisiert wird, umfassend:
Erhalten von Geolokalisierungsinformationen des geografischen Standorts, an dem sich die elektronische Außenvorrichtung (102) befindet, wobei die elektronische Außenvorrichtung (102) eine wiederaufladbare Batterie (142) beinhaltet;
Erhalten von historischen Außentemperaturinformationen des geografischen Standorts auf der Grundlage der Geolokalisierungsinformationen der elektronischen Außenvorrichtung (102);
Bestimmen einer Batterieeinstellung, die eine Obergrenze für einen Ladezustand der wiederaufladbaren Batterie (142) beinhaltet, auf der Grundlage der historischen Außentemperaturinformationen; und
Bereitstellen der wiederaufladbaren Batterie (142) mit der Batterieeinstellung, die die Obergrenze für den Ladezustand der wiederaufladbaren Batterie (142) beinhaltet, wobei die wiederaufladbare Batterie (142) im Betrieb bis zu der Obergrenze für den Ladezustand aufzuladen ist.

2. Verfahren nach Anspruch 1,
wobei Bestimmen der Obergrenze für den Ladezustand der wiederaufladbaren Batterie (142) ferner Folgendes umfasst:
Identifizieren, auf der Grundlage der historischen Außentemperaturinformationen, einer ersten Temperaturkategorie unter einer Mehrzahl vordefinierter Temperaturkategorien, wobei jede vordefinierte Temperaturkategorie gemäß mindestens einem Temperaturschwellenwert definiert ist und einer jeweiligen aus einer Mehrzahl von Obergrenzenstufen entspricht; und
Auswählen, als die Obergrenze für den Ladezustand der wiederaufladbaren Batterie (142), derjenigen Obergrenzenstufe, die der ersten Temperaturkategorie entspricht.

3. Verfahren nach einem der Ansprüche 1 und 2, wobei die elektronische Außenvorrichtung (102) dazu konfiguriert ist, über ein oder mehrere Kommunikationsnetzwerke (160) zu kommunizieren.

4. Verfahren nach Anspruch 3, wobei Erhalten der Geolokalisierungsinformationen des geografischen Standorts, an dem sich die elektronische Außenvorrichtung (102) befindet, ferner Folgendes umfasst:
Erhalten einer IP-Adresse der elektronischen Außenvorrichtung (102) in dem einen oder den mehreren Kommunikationsnetzwerken (160); und
Bestimmen der Geolokalisierungsinformationen des geografischen Standorts auf der Grundlage der IP-Adresse der elektronischen Außenvorrichtung (102).

5. Verfahren nach einer beliebigen Kombination der Ansprüche 1-4, wobei die historischen Außentemperaturinformationen des geografischen Standorts eine durchschnittliche sommerliche Höchsttemperatur (402) beinhalten und das Erhalten der historischen Außentemperaturinformationen des geografischen Standorts ferner Folgendes umfasst:
Extrahieren historischer Daten einer sommerlichen Höchsttemperatur in Bezug auf den geografischen Standort; und
Bestimmen der durchschnittlichen sommerlichen Höchsttemperatur (402) auf der Grundlage der historischen Daten der sommerlichen Höchsttemperatur.

6. Verfahren nach einer beliebigen Kombination der Ansprüche 1-5, wobei die elektronische Außenvorrichtung (102) einen Speicher (122) zum Speichern einer Mehrzahl durchschnittlicher sommerlicher Höchsttemperaturen (402) in Verbindung mit einer Mehrzahl vordefinierter Standorte beinhaltet und das Erhalten der historischen Außentemperaturinformationen des geografischen Standorts ferner Folgendes umfasst:
Identifizieren eines ersten vordefinierten Standorts, der dem geografischen Standort der elektronischen Außenvorrichtung (102) zugeordnet ist, unter der Mehrzahl vordefinierter Standorte; und
Extrahieren einer ersten durchschnittlichen sommerlichen Höchsttemperatur (402), die dem ersten vordefinierten Standort entspricht, als die historischen Außentemperaturinformationen des geografischen Standorts.

7. Verfahren nach einer beliebigen Kombination der Ansprüche 1-6, ferner umfassend:
Bestimmen einer Jahreszeit, in der die wiederaufladbare Batterie (142) bereitgestellt wird; und
Bestimmen der Obergrenze für den Ladezustand der wiederaufladbaren Batterie (142) auf der Grundlage der Jahreszeit.

8. Verfahren nach einer beliebigen Kombination der Ansprüche 1-7, wobei die elektronische Außenvorrichtung (102) einen Temperatursensor (136) beinhaltet, wobei das Verfahren ferner Folgendes umfasst:
Messen einer Batterietemperatur (502) der elektronischen Vorrichtung mit dem Temperatursensor;
Erhalten einer aktuellen lokalen Temperatur (504) des geografischen Standorts von einem entfernten Server;
Bestimmen eines Differenzwerts (508) zwischen der Batterietemperatur und der aktuellen lokalen Temperatur; und
Anpassen der Obergrenze für den Ladezustand der wiederaufladbaren Batterie (142) auf der Grundlage des Differenzwerts.

9. Verfahren nach Anspruch 8, wobei:
die historischen Außentemperaturinformationen einer ersten Temperaturkategorie unter einer Folge geordneter Temperaturkategorien entsprechen, wobei jede Temperaturkategorie gemäß mindestens einem Temperaturschwellenwert definiert ist;
die Obergrenze für den Ladezustand eine erste Obergrenze ist, die der ersten Temperaturkategorie entspricht und aus einer Mehrzahl von Obergrenzenstufen ausgewählt ist, die der Folge geordneter Temperaturkategorien zugeordnet sind; und
das Anpassen der Obergrenze für den Ladezustand der wiederaufladbaren Batterie (142) ferner Folgendes beinhaltet:
gemäß einer Feststellung, dass der Differenzwert einen Temperaturdifferenz-Schwellenwert überschreitet, Anpassen der Obergrenze von der ersten Obergrenze, die der ersten Temperaturkategorie entspricht, auf eine zweite Obergrenze, die einer zweiten Temperaturkategorie entspricht, die der ersten Temperaturkategorie in der Folge geordneter Temperaturkategorien unmittelbar benachbart ist.

10. Verfahren nach Anspruch 8 oder 9, wobei das Verfahren ferner Folgendes umfasst:
gemäß einer Feststellung, dass der Differenzwert größer als ein Warn-Temperaturschwellenwert ist und die Batterietemperatur größer als die aktuelle lokale Temperatur ist, Erzeugen einer Warnmeldung, die angibt, dass die elektronische Vorrichtung überprüft werden muss.

11. Elektronische Außenvorrichtung, die eine wiederaufladbare Batterie (142) beinhaltet und ferner Folgendes umfasst:
einen oder mehrere Prozessoren (124); und
einen Speicher (122), der darauf gespeicherte Anweisungen aufweist, die bei Ausführung durch den einen oder die mehreren Prozessoren (124), wenn die elektronische Außenvorrichtung (102) im Freien an einem bestimmten geografischen Standort initialisiert wird, die Prozessoren (124) veranlassen zum:
Erhalten von Geolokalisierungsinformationen des geografischen Standorts, an dem sich die elektronische Außenvorrichtung (102) befindet;
Erhalten von historischen Außentemperaturinformationen des geografischen Standorts auf der Grundlage der Geolokalisierungsinformationen der elektronischen Außenvorrichtung (102);
Bestimmen einer Batterieeinstellung, die eine Obergrenze für einen Ladezustand der wiederaufladbaren Batterie (142) beinhaltet, auf der Grundlage der historischen Außentemperaturinformationen; und
Bereitstellen der wiederaufladbaren Batterie (142) mit der Batterieeinstellung, die die Obergrenze für den Ladezustand der wiederaufladbaren Batterie (142) beinhaltet, wobei die wiederaufladbare Batterie (142) im Betrieb bis zu der Obergrenze für den Ladezustand aufzuladen ist.

12. Elektronische Außenvorrichtung nach Anspruch 11, wobei die auf dem Speicher (122) gespeicherten Anweisungen bei Ausführung durch den einen oder die mehreren Prozessoren (124) die Prozessoren (124) veranlassen, eines der Verfahren nach den Ansprüchen 2-10 durchzuführen.

13. Nichtflüchtiges computerlesbares Medium für eine elektronische Außenvorrichtung (102), die eine wiederaufladbare Batterie (142) beinhaltet, wobei das nichtflüchtige computerlesbare Medium darauf gespeicherte Anweisungen aufweist, die bei Ausführung durch einen oder mehrere Prozessoren (124), wenn die elektronische Außenvorrichtung (102) an einem bestimmten geografischen Standort initialisiert wird, die Prozessoren (124) veranlassen zum:
Erhalten von Geolokalisierungsinformationen des geografischen Standorts, an dem sich die elektronische Außenvorrichtung (102) befindet;
Erhalten von historischen Außentemperaturinformationen des geografischen Standorts auf der Grundlage der Geolokalisierungsinformationen der elektronischen Außenvorrichtung (102);
Bestimmen einer Batterieeinstellung, die eine Obergrenze für einen Ladezustand der wiederaufladbaren Batterie (142) beinhaltet, auf der Grundlage der historischen Außentemperaturinformationen; und
Bereitstellen der wiederaufladbaren Batterie (142) mit der Batterieeinstellung, die die Obergrenze für den Ladezustand der wiederaufladbaren Batterie (142) beinhaltet, wobei die wiederaufladbare Batterie (142) im Betrieb bis zu der Obergrenze für den Ladezustand aufzuladen ist.

14. Nichtflüchtiges computerlesbares Medium nach Anspruch 13, wobei die darauf gespeicherten Anweisungen bei Ausführung durch den einen oder die mehreren Prozessoren (124) die Prozessoren (124) veranlassen, eines der Verfahren nach den Ansprüchen 2-10 durchzuführen.

## Revendications

1. Procédé d'approvisionnement en batterie d'un dispositif électronique extérieur (102) lorsque le dispositif électronique extérieur (102) est initialisé à un emplacement géographique particulier, comprenant :
l'obtention d'informations de géolocalisation de l'emplacement géographique où se trouve le dispositif électronique extérieur (102), l'appareil électronique extérieur (102) comportant une batterie rechargeable (142) ;
l'obtention d'informations historiques sur la température extérieure de l'emplacement géographique sur la base des informations de géolocalisation du dispositif électronique extérieur (102) ;
la détermination d'un réglage de la batterie comportant une limite supérieure pour un état de charge de la batterie rechargeable (142), sur la base des informations historiques sur la température extérieure ; et
l'approvisionnement de la batterie rechargeable (142) avec le réglage de la batterie comportant la limite supérieure de l'état de charge de la batterie rechargeable (142), la batterie rechargeable (142) devant être chargée jusqu'à la limite supérieure de l'état de charge pendant son fonctionnement.

2. Procédé selon la revendication 1,
dans lequel la détermination de la limite supérieure de l'état de charge de la batterie rechargeable (142) comprend en outre :
l'identification, sur la base des informations historiques de température extérieure, d'une première catégorie de température parmi plusieurs catégories de température prédéfinies, chaque catégorie de température prédéfinie étant définie selon au moins un seuil de température et correspondant respectivement à l'un d'une pluralité de niveaux de limite supérieure ; et
la sélection, comme limite supérieure pour l'état de charge de la batterie rechargeable (142), du niveau limite supérieur correspondant à la première catégorie de température.

3. Procédé selon l'une quelconque des revendications 1 et 2, dans lequel le dispositif électronique extérieur (102) est configuré pour communiquer via un ou plusieurs réseaux de communication (160).

4. Procédé selon la revendication 3, dans lequel l'obtention des informations de géolocalisation de l'emplacement géographique où se trouve le dispositif électronique extérieur (102) comprend en outre :
l'obtention d'une adresse IP du dispositif électronique extérieur (102) sur les un ou plusieurs réseaux de communication (160) ; et
la détermination des informations de géolocalisation de l'emplacement géographique sur la base de l'adresse IP du dispositif électronique extérieur (102).

5. Procédé selon toute combinaison des revendications 1 à 4, dans lequel les informations historiques sur la température extérieure du lieu géographique comportent une température maximale moyenne estivale (402), et l'obtention des informations historiques sur la température extérieure du lieu géographique comprend en outre :
l'extraction des données historiques sur les températures maximales estivales en fonction de la situation géographique ; et
la détermination de la température maximale moyenne estivale (402) sur la base des données historiques de la température maximale estivale.

6. Procédé selon toute combinaison des revendications 1 à 5, dans lequel le dispositif électronique extérieur (102) comporte une mémoire (122) pour stocker une pluralité de températures maximales moyennes estivales (402) associées à une pluralité d'emplacements prédéfinis, et l'obtention des informations historiques sur la température extérieure de l'emplacement géographique comprend en outre :
l'identification d'un premier emplacement prédéfini associé à la localisation géographique du dispositif électronique extérieur (102) parmi la pluralité d'emplacements prédéfinis ; et
l'extraction d'une première température maximale moyenne estivale (402) correspondant au premier emplacement prédéfini comme informations historique de température extérieure de l'emplacement géographique.

7. Procédé selon une quelconque combinaison des revendications 1 à 6, comprenant en outre :
la détermination d'une saison pendant laquelle la batterie rechargeable (142) est approvisionnée ; et
la détermination de la limite supérieure de l'état de charge de la batterie rechargeable (142) sur la base de la saison.

8. Procédé selon une quelconque combinaison des revendications 1 à 7, dans lequel le dispositif électronique extérieur (102) comporte un capteur de température (136), le procédé comprenant en outre :
la mesure d'une température de la batterie (502) du dispositif électronique avec le capteur de température ;
l'obtention d'une température locale actuelle (504) de l'emplacement géographique à partir d'un serveur distant ;
la détermination d'une valeur de différence (508) entre la température de la batterie et la température locale actuelle ; et
l'ajustement de la limite supérieure de l'état de charge de la batterie rechargeable (142) sur la base de la valeur de différence.

9. Procédé selon la revendication 8, dans lequel :
les informations historiques sur la température extérieure correspondent à une première catégorie de température parmi une séquence de catégories de température ordonnées, chaque catégorie de température étant définie selon au moins un seuil de température ;
la limite supérieure de l'état de charge est une première limite supérieure qui correspond à la première catégorie de température et qui est sélectionnée parmi une pluralité de niveaux de limite supérieure associés à la séquence des catégories de température ordonnées ; et
l'ajustement de la limite supérieure de l'état de charge de la batterie rechargeable (142) comporte en outre :
conformément à une détermination que la valeur de différence dépasse un seuil de différence de température, l'ajustement de la limite supérieure de la première limite supérieure correspondant à la première catégorie de température à une seconde limite supérieure correspondant à une seconde catégorie de température qui est immédiatement adjacente à la première catégorie de température dans la séquence des catégories de température ordonnées.

10. Procédé selon la revendication 8 ou 9, le procédé comprenant en outre :
conformément à la détermination que la valeur de différence est supérieure à un seuil de température d'alerte et que la température de la batterie est supérieure à la température locale actuelle, générer un message d'alerte indiquant que le dispositif électronique doit être vérifié.

11. Dispositif électronique d'extérieur, comportant une batterie rechargeable (142) et comprenant en outre :
un ou plusieurs processeurs (124) ; et
une mémoire (122) ayant des instructions stockées sur celle-ci qui, lorsqu'elles sont exécutées par les un ou plusieurs processeurs (124) lors de l'initialisation du dispositif électronique d'extérieur (102) à l'extérieur, à un emplacement géographique donné, amènent les processeurs (124) à :
obtenir des informations de géolocalisation de l'emplacement géographique où se trouve le dispositif électronique extérieur (102) ;
obtenir des informations historiques sur la température extérieure de l'emplacement géographique sur la base des informations de géolocalisation du dispositif électronique extérieur (102) ;
déterminer un réglage de la batterie comportant une limite supérieure pour un état de charge de la batterie rechargeable (142), sur la base des informations historiques sur la température extérieure ; et
approvisionner la batterie rechargeable (142) avec le réglage de la batterie comportant la limite supérieure de l'état de charge de la batterie rechargeable (142), la batterie rechargeable (142) devant être chargée jusqu'à la limite supérieure de l'état de charge pendant son fonctionnement.

12. Dispositif électronique extérieur selon la revendication 11, dans lequel les instructions stockées dans la mémoire (122), lorsqu'elles sont exécutées par les un ou plusieurs processeurs (124), amènent les processeurs (124) à réaliser l'un quelconque des procédés selon les revendications 2 à 10.

13. Support non transitoire lisible par ordinateur pour un dispositif électronique extérieur (102) comportant une batterie rechargeable (142), le support non transitoire lisible par ordinateur contenant des instructions qui, lorsqu'elles sont exécutées par un ou plusieurs processeurs (124) lors de l'initialisation du dispositif électronique extérieur (102) à un emplacement géographique particulier, amènent les processeurs (124) à
obtenir des informations de géolocalisation de l'emplacement géographique où se trouve le dispositif électronique extérieur (102) ;
obtenir des informations historiques sur la température extérieure de l'emplacement géographique sur la base des informations de géolocalisation du dispositif électronique extérieur (102) ;
déterminer un réglage de la batterie comportant une limite supérieure pour un état de charge de la batterie rechargeable (142), sur la base des informations historiques sur la température extérieure ; et
approvisionner la batterie rechargeable (142) avec le réglage de la batterie comportant la limite supérieure de l'état de charge de la batterie rechargeable (142), la batterie rechargeable (142) devant être chargée jusqu'à la limite supérieure de l'état de charge pendant son fonctionnement.

14. Support non transitoire lisible par ordinateur selon la revendication 13, dans lequel les instructions stockées sur celui-ci, lorsqu'elles sont exécutées par les un ou plusieurs processeurs (124), amènent les processeurs (124) à réaliser l'un quelconque des procédés selon les revendications 2 à 10.
